# EUROPEAN PATENT SPECIFICATION

(11) **EP 1 307 716 B1**
(45) Date of publication and mention of the grant of the patent: **06.02.2008**
(21) Application number: 01953266.2
(22) Date of filing: 03.08.2001
(51) Int. Cl.: G01J 3/50

(54) **COLOUR MATCHING SYSTEM**
SYSTEM ZUR FARBABSTIMMUNG
SYSTEME D'APPARIEMENT DE COULEURS

(30) Priority: 07.08.2000 GB 0019297; 03.11.2000 GB 0027021; 13.02.2001 GB 0103453; 26.04.2001 GB 0110197; 08.06.2001 GB 0113947
(43) Date of publication of application: 07.05.2003
(73) Proprietor: Digital Colour Measurement Limited, Leeds LS2 3AR (GB)
(72) Inventor: GILL, Malcolm, Holywell Green, Halifax HX4 9DF (GB); PRIESTLEY, Derek, Brighouse HD6 2HP (GB); BURKINSHAW, Stephen, Collingham, Wetherby LS22 5BY (GB); NATTRESS, Brian, Guisley, Leeds LS20 8RA (GB)
(74) Representative: Harrison Goddard Foote
(86) International application number: PCT/GB2001/003480
(87) International publication number: WO 2002/012847

(56) References cited:
- EP-A- 0 913 674
- US-A- 4 120 591
- US-A- 4 836 674
- US-A- 5 177 694
- US-A- 6 007 332

## Description

The present invention relates to a system for, and method of, colour matching, for particular, but not exclusive, use in the colour matching of articles such as teeth.,

### Background to the Invention

It is known from the prior art to colour match a variety of objects simply by eye and to compare the colour with a reference colour guide. The colour guide is usually held in proximity to the test object for a direct comparison. This is a purely subjective evaluation and can lead to a colour mismatch since one person's assessment may differ from another's. Moreover, the perception of colour is dependent on a number of factors such as the background lighting conditions and texture of the object itself. An object with a pitted surface may, if viewed in one direction, cast shadows on its own surface thus distorting the overall colour of the object. Alternatively, a smooth shiny object can reflect light from its surface leading to bright spots similar colour distortions.

In the restoration or replacement of a tooth or set of teeth, it is important accurately to select the correct tooth colour so as to match, not only the adjacent tooth in colour and shape, but to match the entire set of teeth in overall colour harmony and surface contour profile. However, it is difficult to critically assess highly reflective surfaces such as the enamel of teeth. It is known from the prior art to quantify the colour of teeth by manually comparing a patient's natural teeth with a set of "shade guides". These guides typically comprise a row of substantially flat, plastic tooth shaped items mounted on a board in ascending grades of shades. The first step in the colour determination process is made subjectively by the dentist or dental technician, by holding the shade guide next to the patient's own natural teeth and attempting to find the best match. This can be problematic because tooth colour is affected not only by ambient light colour/intensity in the surgery i.e. fluorescent or natural light, but also by the surrounding colour of the patient's own clothing or make-up/complexion. In addition this step is dependent on the visual acuity and experience of the dentist or dental technician.

Once the dentist or dental technician has made his/her choice of best match colour from the shade guide the next step in the process is to relay the information to a dental laboratory technician who then constructs the dental prosthesis, typically from a set of pre-coloured components. The information he/she may receive is that the dental prosthesis required is a mix between two of the shades on the guide. In this step of the overall process, there is a dependency on a yet further subjective colour assessment by the dental laboratory technician when mixing appropriate ratios of the pre-coloured components to the specified recipe. Once constructed, the finished product is then returned to the dentist for fitting into a patient's mouth. It is only after the dental prosthesis has been constructed that it becomes apparent if the colour match was accurately evaluated by the dentist or dental technician and subsequently constructed by the dental laboratory technician. It will be appreciated this process often results in unacceptable levels of colour mismatching so that a second or replacement dental prosthesis needs to be constructed at a substantial cost and inconvenience to the patient, dental professional and dental prosthesis manufacturer.

Methods which have been attempted to try to minimise human error when assessing tooth colour include:
- illuminating the patient's mouth in a controlled manner and comparing the natural teeth to a reference shade guide set illuminated under similar conditions. The problem with this method is that it does not completely eliminate variations in ambient lighting conditions.
- photographing the patient's mouth with a reference shade guide in the frame. The problem with this method is that the equipment can be bulky and that the colour in the photograph may be distorted and/or misrepresented through the process of developing and producing the photograph. In addition, the flash from the camera causes high levels of reflection from the tooth surface.
- videoing the patient's mouth with a reference shade guide in the frame. The problem with this method is that the equipment can be bulky and that the colour in the video may not be accurate. Moreover, the video cameras are intra-oral and so careful hygiene procedures have to be adopted which can be time consuming and may not even be completely effective.
- manually drawing and painting/colouring an artist's impression of a tooth. The problem with this is that it can be expensive, time consuming, and it is not independent of ambient lighting conditions.

None of the prior art methods are capable of capturing an exact colour image of a natural tooth. This is partly because of the inherent properties of teeth themselves. Natural teeth are curved, not uniformly smooth and the colour distribution of the tooth is not even or uniformly distributed throughout the tooth. Natural teeth are translucent on their surface, the transparencies of dentine and enamel are difficult to correct for when representing the colour of a tooth. Teeth are light reflective which results in bright spots and bright lines. All of these factors contribute to the difficulty in accurately capturing a colour image of a tooth.

A problem not addressed by any of the prior art methods is the subjective colour assessment which the dental laboratory technician has to make when given a recipe or image to work to, so as to construct the dental prosthesis. Some methods have made improvements in the standardisation of assessing the colour of the patient's tooth in the first instance, but problems remain with human errors in constructing and colour matching the prosthesis to a recipe.

A method of accurate colour image capture which is non-invasive, and construction of a prosthesis to that colour would offer immediate advantage over the prior art.

An interactive dental restorative network is known from document WO 00/25696.

### Statement of Invention

In its broadest aspect the present invention provides a system for, and method of, colour matching and/or colour identification of an object by capturing a colour image and communication, processing, display and manipulation thereof.

According to a first aspect of the invention there is provided a system for colour matching or identifying colour components of a tooth comprising:
(i) a digital camera with cross-polarised filtration for taking a coloured image of the tooth (1);
(ii) means (2) for directly relaying the coloured image to a place remote from a location where the image of the tooth was taken;
(iii) means (2) for analysing colour values of the image; and
(iv) means (4) for converting the colour values into parameters from which the original colour of the tooth can be reconstituted or into parameters and comparing the colour values against a reference characterised in that the system further comprises a single grey reference colour indicator which is placed in close proximity to the tooth so that the captured image contains the reference grey colour, wherein the grey is cool grey C Pantone number 8.

The camera is provided with cross-polarised filtration. Typically this is achieved by a pair of cross-polarised filters, preferably the filters are grey so as provide a minimal colour temperature shift whilst simultaneously providing good transmission. The effect of cross-polarised photography is to control reflections, lustre and to cut out glare.

Preferably, the camera is pre-set and/or pre-programmed to a specified focal length. For example, the focal length may be 25 ± 2 cm. It is desirable to try to reduce any deviations in focal length so as to minimise errors that may occur by virtue of variations in, or non-uniform, illumination.

Preferably, the system further includes a camera housing assembly for supporting the camera.

Preferably, the camera housing assembly is provided with a light source for illuminating the object. Typically, medical grade light is transmitted to the assembly via a fibre optic cable. The light source comprises, for example, a plurality of light spots arranged in a ring. It will be appreciated that the fibre optic cable can be divided/split so as to produce individual lights spots. A typical light source comprises 12 light spots arranged in a ring which focus at, for example, 25 ± 2 cm from the object which is to be imaged. However, as few as 4 light spots and up to 24 light spots are usually provided. The light spots act to provide a quantifiable field of light and as such their number is not intended to limit the scope of the application.

Preferably, the camera housing assembly further comprises a telescopic member for preventing incidental light entering the field of shot.

Preferably, the telescopic member comprises a tube. Preferably, the tube comprises two independently extendible lengths associated along their longitudinal axes. In one embodiment the associated lengths comprise longitudinal tube halves (i.e. notionally formed by dividing the tube lengthwise across its diameter) whose longitudinal edges slidingly engage and which may be adjusted so that, in use, and when extended, the tube can be made to conform approximately to the shape of curved objects and to rest thereagainst by extending one half of the tube more than the other half. This arrangement is of particular advantage when taking images of a patient's teeth that are not in a central position in the mouth. In use, the tube is extended prior to taking of the image and may be retracted when not in use.

Preferably, the camera housing assembly further comprises means for assessing distance between the camera and the object to be imaged. In one embodiment, the means for assessing the distance comprises a cross-hair arrangement, the cross-hairs preferably being mutually perpendicular, for example horizontal and vertical, which when correctly aligned indicates to a user that the correct distance between the camera lens and object has been achieved. Alternatively, a pair of right and left light beams or lasers may be used so that when the right and left beams meet at a common point the user knows that the correct distance has been reached.

It will be appreciated that the system of the present invention advantageously provides a quantifiable and controllable light source, in addition to quantifiable and controllable distance from camera to object and pre-determined camera settings so that accurate and reproducible images of an object can be obtained.

Preferably, the system further includes a reference colour indicator placed in close proximity to the object or associated with the camera's visual field so that the captured image contains a reference colour.

The reference colour is grey and more preferably still the grey is cool grey C pantone number 8. The reference indicator may take the form of a substantially U or L shaped block and in an alternative embodiment the reference indicator may be in the form of a sheet or paper. In this particular embodiment the reference indicator is provided as paper with an adhesive side so that it may be attached to the substantially U or L shaped blocks. It is envisaged that the reference indicator paper will be supplied in roll form so that the outer layer protects underlying layers and acts to preserve the colour by protecting it from light and/or mechanical damage. The reference indicator may also be labelled so that the image of the object can easily be identified or cross referenced.

Preferably, the means for relaying the captured image to a place remote from where the image was captured is an electronic communication means such as the Internet or a dedicated telephone line or may be a data carrier such as a disc or CD-ROM or the like.

Preferably, in the instance of relaying image data via the Internet the data is encrypted so that whilst it is in the public domain or "on air" it is in a form that cannot be accessed by the public. It will be appreciated that some information, especially that relating to medical and/or dental records, is confidential information between a patient and health professional(s).

Preferably, the means for analysing the colour values is a computer software program which is capable of converting the cross-polarised image of the original object into a plurality of single colour images.

The tooth is divided into several areas of similar colour value, each of which is assigned a unique bright colour key thus making them more distinguishable to the eye. The analysis proceeds to determine both the average and the most dominant colour value in each area. The colour values are represented by the intensity of red, green and blue components of that value.

Preferably, the colour values of the captured image of the original object colour are represented by intensities of red, blue and green colour components. Thus, three colour components (for red, blue and green) are generated from the constituents of the colour values of the original image.

The software program is preferably also capable of converting the single colour images into parameters from which the original colour of the object can be reconstituted. The program preferably contains a database of predetermined colour attributes.

In use, the system allows a user to take a photograph of an object, for example a piece of coloured textile and to relay information relating to the photograph to a place remote from where the textile actually is, for example a paint factory. An operator in the paint factory then initiates the software program to analyse the colour values from which a recipe can be generated so that a replica of the colour of the textile can be reconstituted from various ratios of different dyes.

Preferably, the system is for colour matching a natural tooth or set of teeth so that a dental prosthesis can be constructed to match the natural tooth of a patient.

Reference herein to a dental prosthesis is intended to include crowns, dentures, caps and any other dental product which is intended to replace or form part of a patient's set of teeth.

In this embodiment of the invention the system provides means for capturing an image of a natural tooth, means for relaying the image of the tooth to a dental laboratory, means for analysing colour values of the image of the tooth and means for converting the colour values of the tooth into parameters from which a dental prosthesis colour matching the colour attributes of the patient's natural tooth can be made.
The database of predetermined colour attributes will generally contain fewer discrete attributes than are present within the true-colour digital image. In a particularly preferred application of the present invention, which is to generate dental prostheses from ceramics or the like of known colours so as closely to match a patient's natural tooth colours, the database will contain the colour attributes of a range of available ceramics materials or the like. The database may contain several subsets of ceramics colours corresponding to the ranges of colours offered by different ceramics manufacturers. At present, most manufacturers of ceramics for use in dental prostheses offer one or more discrete ranges of about sixteen subtly different shades. Hitherto, dental prostheses have been made using a single shade or colour of ceramic which has been subjectively judged to be the closest match to a patient's existing tooth or teeth. However, by way of the present invention, it is possible to determine shade variations within a single tooth and to replicate these shade variations in a prosthesis by selecting the closest match from the predetermined range of ceramics colours for individual areas of the tooth, and then to construct a prosthesis by painting or otherwise applying different shades of ceramics to a base prosthesis so as broadly to match the colour variations in the natural tooth. This is a significant advantage over the prior art.

The system of the present invention is of particular advantage in that cross-polarised filtration cuts out, or at least substantially reduces, the glare from the highly reflective surface of a wet enamelled tooth. In this way, an accurate coloured image of a tooth *in situ* can be obtained. A further advantage of the system resides in the computer programme's ability to break down and analyse colour values from the image of the original tooth and provide colour attributes from which the original colour can be made. This feature advantageously assists the dental laboratory technician in accurately constructing a dental prosthesis to an exact recipe. A yet further advantage of the system is that it reduces human error in subjective colour matching.

It will be appreciated that the system of the present invention may be used to take a coloured image of for example and without limitation, a precious metal such as gold and compare this to a standard reference for the colour of a specified purity. The system may also be used to record the individual characteristic colour values of gems such as diamonds. The present system may advantageously be used to facilitate transfer of colour characteristic information and to create reference data.

A yet further use of the colour identification system lies in the security and printing industries, where colour components of currency notes/bonds/securities may be authenticated in addition to photographic identification cards or the like.

According to a further aspect of the invention there is provided a method of colour matching or identifying colour parameters of a tooth comprising the steps of :
(i) capturing a coloured image of the tooth with a single grey reference colour indicator placed in close proximity to the tooth, the grey being cool grey C Pantone number 8:
(ii) relaying the captured image to a place remote from where image was captured ;
(iii) analysing colour values from the captured image; and
(iv) converting the colour values from the captured image into parameters from which the original colour of the tooth can be reconstituted or into parameters so as to compare them to a reference set and/or to record individual characteristic colour values.

Preferably, the method further includes the step of illuminating the tooth with a supply of known light at a specified distance therefrom. For example, this could be by conventional lighting means or by a fibre optic cable suitably positioned with respect to the tooth. In this way illumination of the tooth can be standardised and variations that could occur from differing light sources placed at different distances from the object can be reduced

Preferably, the method further includes the step of reducing/preventing incidental outside light from entering a field of shot. This may be achieved by extending a telescopic tube having two ends so that one end of the tube rests against a surface of the object to be imaged.

The method includes the step of including a reference indicator colour with the captured image. Typically, the reference indicator colour is grey and typically is cool grey C pantone number 8 and thus is of known red, green and blue values. In this way, when the colours of the captured image are analysed, the software program locates the reference colour indicator in the captured image and corrects the red, green and blue values of the whole captured image relative to the reference colour indicator.

Preferably, the method further comprises the step of relaying the colour values back to where the original image was captured so that a comparison can be made between the colour of the original object and that of the reconstituted colour image. This step helps to determine that the correct colour recipe has been achieved.
Preferably, a visual display unit (VDU) provided at the place where the image was captured and/or where the captured image is relayed for analysis includes software for correcting the reference colour red, green and blue values on the VDU so that the displayed image on the VDU is colour corrected with respect to the reference colour.

Preferably, the method further comprises the step of committing to memory or storing the generated colour recipe in a central data bank.

Preferably, the method as hereinbefore described is for colour matching a natural tooth or set of teeth with a dental prosthesis.

The method of the present invention is of particular advantage in that, in use, it offers a non-invasive, internal contact-free procedure for obtaining dental information from a patient.

By eliminating the need for placing a camera inside the patient's mouth the present method offers a more hygienic method than the prior art procedures which employ intra-oral cameras and direct contact with the patient's mouth.

Preferably, when taking the image of the patient's natural tooth/teeth *in situ,* the camera is positioned a predetermined distance from a skeletal reference point on a patient's skull.

Preferably, the camera is positioned in the region of 15-25cm from the skeletal reference point. The position of the camera from the patient can be monitored by, as hereinbefore described, aligning mutually perpendicular, e.g. horizontal and vertical, cross-hairs or by a common point when right and left light bearns/lasers coincide.

Preferably, the skeletal reference point is at the bridge of the patient's nose or nap of his/her chin, the nap being formed at the junction of the lower jaw and bottom set of teeth.

Accordingly, in this application the method comprises the steps of capturing a coloured image of a natural tooth, relaying the captured image to a dental laboratory where a computer program is initiated so as to analyse the colour values of the image of the tooth and to generate a values of intensity of red, green and blue components of the image. A digital image, or contour image, may then be used as a guide by, say, a dental laboratory technician to assist in manufacturing a dental prosthesis by selecting the ceramic shades corresponding to the false-colour representations and then painting these onto a base prosthesis in accordance with the contour map of the third digital image. The dental laboratory technician converts the colour values of the image of the tooth into a recipe from which the original tooth colour can be reconstituted as a dental prosthesis. The dental technician can then compare the dental prosthesis with the original image before releasing the finished article to the dentist for fitting into a patient's mouth.

It will be appreciated that the method of the present invention may be also be used to monitor colour deterioration over time of, for example, textiles or paintings by comparing colour values against each other over time. Additionally the method may be used to monitor colour standards during industrial processes such as car and/or textile manufacture.

According to a yet further aspect of the invention there is provided use of the system and/or method as hereinbefore described for the colour matching of a natural tooth to a dental prosthesis.

It will be understood that the system may also be used to capture images of a part of a body and to relay this information to a health care professional remote from the patient so that a diagnosis can be made without the patient needing to be physically present. It is envisaged that the system of the present invention may also be used for diagnosing dermatological lesions and other such conditions where the physical appearance and colour of an organ is a relevant diagnostic factor.

According to a yet further aspect of the invention there is provided a dental prosthesis produced by the method of the invention.

According to a yet further aspect of the invention there is provided a method of making a dental prosthesis using the system of the present invention comprising the steps of:
(i) determining shade variations within a tooth;
(ii) replicating the shade variations in a prosthesis by selecting a closest match from a predetermined range of ceramics colours for individual areas of the tooth; and
(iii) constructing a prosthesis by painting or otherwise applying different shades of ceramics to a base prosthesis so as to match the colour variations in the tooth.

### Brief Description of the Drawings

The invention will now be described by way of example only and with reference to the following Figures wherein:
Figure 1 represents a schematic flow diagram of the method of colour matching according to the present invention.
Figure 2 represents a schematic flow diagram of one embodiment of the method of the invention.
Figure 3 represents a colour analysis of a tooth using the method of the present invention.
Figure 4 represents a colour reference indicator *in situ* in a patient's mouth.

### Detailed Description of the Invention

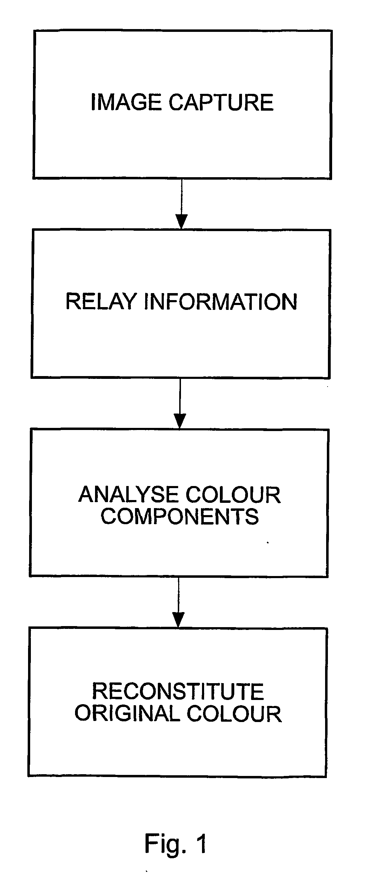

With reference to Figure 1 there is shown a flow diagram of the steps of the method of colour matching/identification of an object according to the present invention.

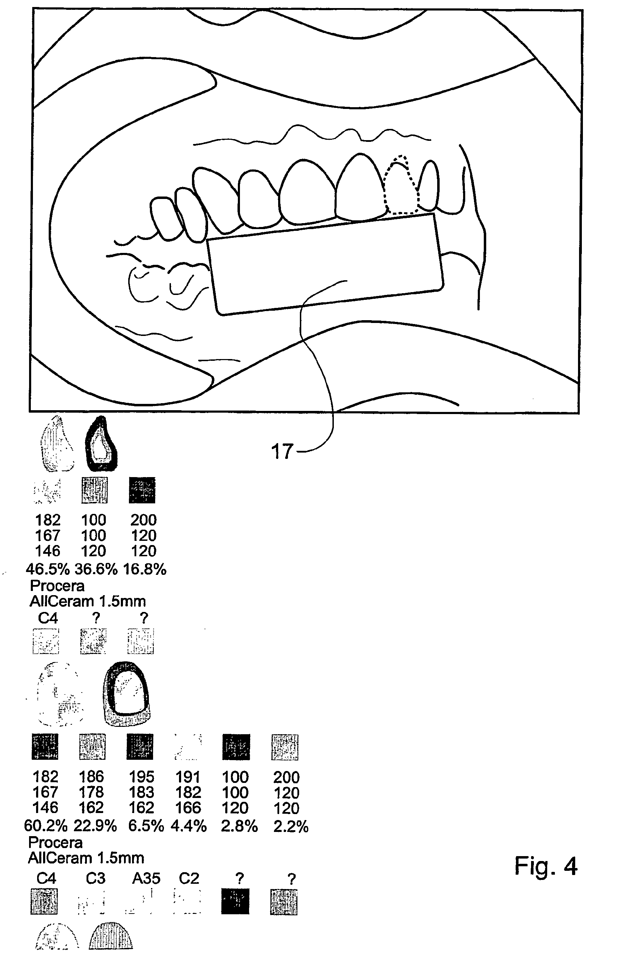

The first step of the method is to capture an image of an object which it is desired to colour match and/or colour identify. This is achieved by first illuminating the object with an appropriate light source and taking at least one photograph of it with a digital camera fitted with cross-polarised filtration. Optionally a colour reference indicator is included in the captured image (see Figure 4). The camera can be pre-programmed to a specified focal length and arranged to be a selected distance away from the object in order to reduce variations in illumination conditions. The object could be a piece of textile, wall covering, part of a picture which needs to be restored or requires the original colour recorded for posterity, a car body part or a human face for which a suitable cosmetic/hair dye hue can be matched, area of a human body, specimen of currency, photograph, precious metal or gem or any other article which needs to be colour matched/identified.

Once the at least one photograph has been taken, information relating to the colour image can be relayed by an electronic communication system or on a data carrier to a site remote from where the at least one photograph was taken. When this information is received at the appropriate site, an operator initiates a computer program which is capable of interpreting the received data and analysing the colour values of the original image, optionally with respect to the colour reference indicator. Typically the colour values are assigned individual bright colour keys and the analysis proceeds to determine the average and most dominant colour value in each area. The colour values are represented by the intensities of the red, green and blue components of that value. Intensity of red, blue and green is selected as these colours are the primary colours of light. Each image is analysed so that the intensity and relative ratio of each colour is calculated. From the image, colour intensity values are generated so that a replica of the colour of the original coloured object can be produced. The computer program is also capable of converting the values of the red, green and blue intensities into parameters that the operator can reconstitute into colour, for example dye numbers, cosmetic colour values and so on.

The operator can then view the reconstituted image next to the data received for a direct comparison. Alternatively, the operator can transmit the information relating to the reconstituted image to the location of original object so that a comparison can be made between the object itself and the reconstituted image. This step allows for quality control. In the instance of providing a colour reference indicator, the whole image on the VDU/monitor/screen can be colour corrected/calibrated.

It will be appreciated that the method of the present invention provides advantages over the prior art by reducing the level of subjective human assessment of colour matching/identification. Moreover, the method of the present invention can be applied to many diverse industries and can be used to monitor colour quality control in the paint, dye, car and textile industries. It is envisaged that one particular use that will offer improvement over current practices is in colour matching original tooth/teeth colour to a dental prosthesis.

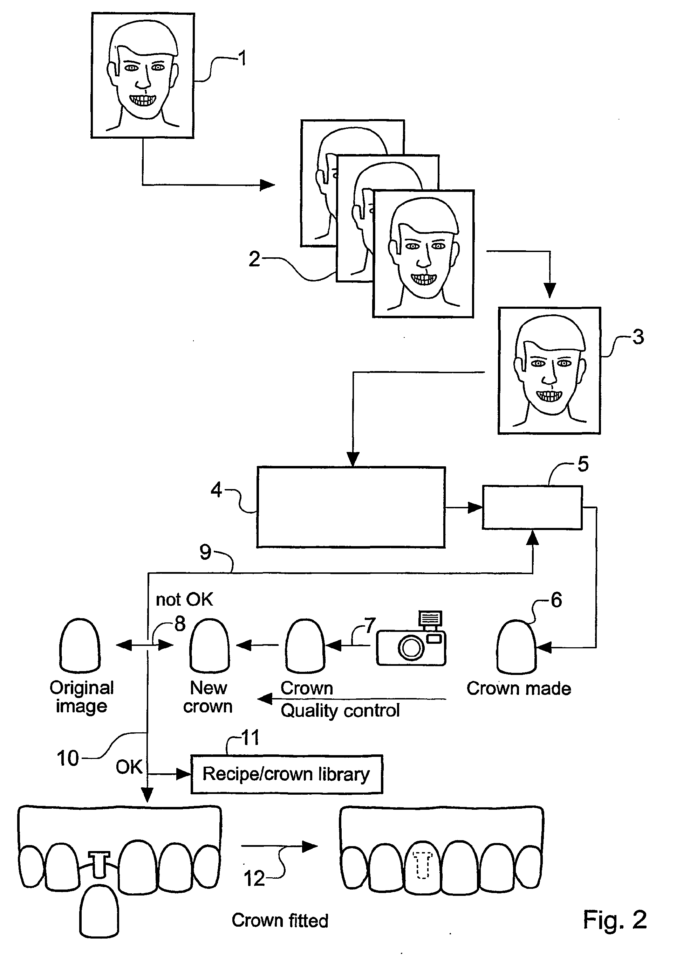

With reference to Figure 2 there is shown a schematic flow diagram of the method of the present invention when used to colour match a crown. In this process, the first step is to illuminate the patient's mouth in a controlled manner with a known and reproducible light source. The dentist then takes a photograph of the patient's mouth with a digital camera fitted with cross-polarised filtration so as to produce an image (1). The dentist would typically set the camera a pre-determined distance away from the patient with respect to a skeletal reference point such as the bridge of the nose and/or nap of the patient's chin. In this way variations between photographs can be reduced.

Information relating to the colour of the patient's original tooth is downloaded from the digital camera and sent via an electronic communication system such as the Internet or on an electronic data carrier system such as a floppy disc or CD-ROM to the dental laboratory. Since this information is confidential, the information would typically be encrypted for transmission. Once received, the image data is decoded and processed by the computer program so that a series of red, blue and green intensities (2) corresponding to the primary colours of light are produced. The computer program then can calibrate the image with respect to a colour reference indicator into constituent colour values (2) and then into an image (3), and at the same time the program analyses the colour values into relative ratios and distribution patterns so as to generate a colour map. The map can then be converted into dental laboratory parameters such as porcelain colours and so on (4), and the program thereafter provides a recipe (5) from which the dental laboratory technician is able to construct a prosthesis/crown (6).

An image (7) of the prosthesis/crown (6) is then subjected to quality control by comparing its colour to that of the original natural tooth (8). In the instance that there is a discrepancy in the match of colour between the new crown and the original tooth (9) the dental technician can amend the recipe (5) to compensate for the colour difference or alternatively request a further original photograph to work from. In this way, the colour of the crown can advantageously be checked before it is released to the dentist for fitting into a patient's mouth.

In the instance that the crown colour matches the original natural tooth (10), the recipe can be recorded in a central data bank (11) or crown recipe library for future reference. Subsequently, the colour matched crown can be released to the dentist for fitting (12) into the patient's mouth.

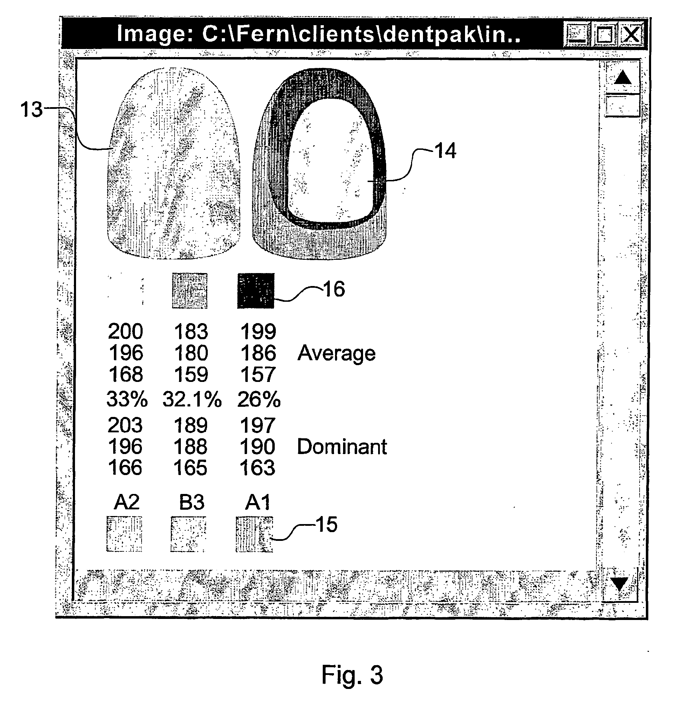

With reference to Figure 3 there is shown a colour analysis of a tooth using the method of the present invention. The tooth image (13) is divided into several areas of similar colour value, each of which is assigned a unique bright colour key thus making them more distinguishable to the eye as in image (14). The analysis proceeds to determine both the average and the most dominant colour value in each area. The colour values are represented by the intensities of red, green and blue components of that value so that a colour map of the tooth can be visualised. A dental technician may then use image (14) and the keys (15) and (16) to create a dental prosthesis by painting or otherwise applying ceramics materials of the colours shown in key (15) onto a base prosthesis (not shown), using image (14) as a clear contour guide, thus creating a prosthesis matching the image (13).

When, obtaining the image of a tooth the patient must also have placed in his or her mouth a colour reference indicator (Figure 4 item 17). A typical colour reference indicator is in the form of a block of plastics material, substantially U or L shaped in cross section, to which a patient reference number may be attached or marked. The colour reference indicator is of a suitable size to fit in the patient's mouth without obscuring the tooth to be imaged, whilst still being visible in the image.

The method of the present invention provides improvements over the prior art by reducing the problems associated with construction of a dental prosthesis and helps to avoid the situation where it is found that there is a colour mismatch only when the prosthesis is constructed and returned to the dentist. The present method allows for quality control before release of the prosthesis to the dentist and in this way it is expected that the present method is time efficient and cost effective.

It will also be appreciated that the present invention is of use in diagnosing dermatological lesions and other such conditions where the physical appearance and colour of an organ is a relevant diagnostic factor. The system can be used for capturing images of a part of a body and to relaying this information to a health care professional remote from the patient so that a diagnosis can be made without the patient needing to be physically present.

## Claims

1. A system for colour matching or identifying colour components of a tooth comprising:
(i) a digital camera with cross-polarised filtration for taking a coloured image of the tooth (1);
(ii) means (2) for directly relaying the coloured image to a place remote from a location where the image of the tooth was taken;
(iii) means (2) for analysing colour values of the image; and
(iv) means (4) for converting the colour values into parameters from which the original colour of the tooth can be reconstituted or into parameters and comparing the colour values against a reference **characterised in that** the system further comprises a single grey reference colour indicator which is placed in close proximity to the tooth so that the captured image contains the reference grey colour, wherein the grey is cool grey C Pantone number 8.

2. A system according to claim 1 wherein the reference colour indicator comprises a substantially U or L shaped block or a sheet or paper.

3. A system according to any preceding claim wherein the means for relaying the captured image to a place remote from a location where the image was captured is an electronic communication means.

4. A system according to Claim 3 wherein the electronic communication means is an Internet connection, a dedicated telephone line or a data carrier.

5. A system according to Claim 4 wherein in the instance of relaying image data via the Internet data is encrypted so that whilst it is in the public domain or "on air" it is in a form that cannot be accessed by the public.

6. A system according to any preceding claim, wherein the means for analysing the colour values is a computer software program which is capable of converting the cross-polarised image of the original object into a plurality of colour components.

7. A system according to any preceding claim wherein the colour values of the captured image of the tooth are represented by intensities of red, blue and green colour components.

8. A system according to any preceding claim for use in colour matching a natural tooth or set of teeth so that a dental prosthesis can be constructed to match the natural tooth of a patient.

9. A method of colour matching or identifying colour parameters of a tooth comprising the steps of:
(i) capturing a coloured image of the tooth with a single grey reference colour indicator placed in close proximity to the tooth, the grey being cool grey C Pantone number 8.
(ii) relaying the captured image to a place remote from where image was captured ;
(iii) analysing colour values from the captured image; and
(iv) converting the colour values from the captured image into parameters from which the original colour of the tooth can be reconstituted or into parameters so as to compare them to a reference set and/or to record individual characteristic colour values.

10. A method according to Claim 9 wherein the object is illuminated with a supply of known light at a specified distance therefrom prior to step (i).

11. A method according to either claim 9 or 10 further including the step of reducing/preventing incidental light from entering a field of shot.

12. A method according to any of claims 9 to 11 wherein the reference colour indicator is of known red, green and blue values, so that when the colours of the captured image are analysed, the reference colour is located in the captured image and red, green and blue values of the whole captured image are corrected relative to the reference colour.

13. A method according to any one of Claims 9 to 12 further including the step of relaying the colour values back to a location where the original image was captured so that a comparison can be made between the colour of the original tooth and that of the reconstituted colour image.

14. A method according to any one of Claims 9 to 13 wherein a VDU is provided at the place where the image was captured and/or where the captured image is relayed for analysis is provided with software for correcting reference colour red, green and blue values on the monitor/screen so that a displayed image on the VDU is colour corrected with respect to the reference colour.

15. A method according to any one of Claims 9 to 14 further including the step of committing to memory or storing a colour recipe in a central data bank.

16. A method according to any one of claims 9 to 15 further including any one or more of the features recited in claims 2 to 7.

17. A method according to any one of Claims 9 to 16 when used in colour matching a natural tooth or set of teeth with a dental prosthesis.

18. A method according to Claim 17 wherein when taking the image of a patient's natural tooth/teeth *in situ,* the camera is positioned a predetermined distance from a skeletal reference point on a patient's skull.

19. A method according to Claim 18 wherein the camera is positioned from 15-25 cm inclusive from the skeletal reference point.

20. A method according to either Claim 18 or 19 wherein the skeletal reference point is at the bridge of the patient's nose or nap of his/her chin, the nap being formed at the junction of the lower jaw and bottom set of teeth.

21. A method according to any one of claims 17 to 20 wherein the camera position with respect to the patient is monitored by aligning horizontal and vertical cross hairs or by a common point when left and right light beams or lasers coincide.

22. A method of making a dental prosthesis using the method according to any of claims 9 to 16 further comprising the steps of:
(i) determining shade variations within a tooth;
(ii) replicating the shade variations in a prosthesis by selecting a match from a predetermined range of ceramics colours for individual areas of the tooth; and
(iii) constructing a prosthesis by painting or otherwise applying different shades of ceramics to a base prosthesis so as to match the colour variations in the tooth.

## Patentansprüche

1. System zur Farbabstimmung oder Identifizierung von Farb-Komponenten eines Zahns, umfassend
(i) eine Digitalkamera mit kreuz-polarisierter Filtration zum Aufnehmen eines gefärbten Bildes des Zahns (1);
(ii) Mittel (2) zum direkten Weiterleiten des gefärbten Bilds an eine Stelle, die entfernt von dem Ort ist, an dem das Bild des Zahns aufgenommen wurde;
(iii) Mittel (2) zum Analysieren von Farbwerten des Bildes; und
(iv) Mittel (4) zum Umwandeln der Farbwerte in Parameter, aus denen die Originalfarbe des Zahns wieder hergestellt werden kann, oder in Parameter und Vergleichen der Farbwerte mit einem Bezugswert, **dadurch gekennzeichnet, dass** das System weiter einen einzelnen Grau-Referenz-Farb-Indikator umfasst, der in großer Nähe zu dem Zahn angeordnet ist, so dass das aufgenommene Bild die Referenz-Grau-Farbe enthält, worin das Grau Cool Grey C Pantone Nr. 8 ist.

2. System nach Anspruch 1, worin der Referenz-Farb-Indikator einen im Wesentlichen U-förmigen oder L-förmigen Block oder ein Blatt oder Papier umfasst.

3. System nach irgendeinem vorangehenden Anspruch, worin das Mittel zum Weiterleiten des aufgenommenen Bildes an eine Stelle, die entfernt von dem Ort ist, an dem das Bild aufgenommen wurde, eine elektronische Kommunikations-Einrichtung ist.

4. System nach Anspruch 3, worin die elektronische Kommunikations-Einrichtung eine Internet-Verbindung, eine festgeschaltete Telefonleitung oder ein Datenträger ist.

5. System nach Anspruch 4, worin in dem Beispiel der Weiterleitung von Bilddaten über das Internet die Daten so verschlüsselt werden, dass die Daten, so lange sie im öffentlichen Bereich oder "auf Sendung" sind, in einer Form vorliegen, zu der die Öffentlichkeit keinen Zutritt haben kann.

6. System nach irgendeinem vorangehenden Anspruch, worin das Mittel zum Analysieren der Farbwerte ein Computer-Software-Programm ist, das in der Lage ist, das kreuz-polarisierte Bild des Original-Gegenstands in eine Mehrzahl von Farb-Komponenten umzuwandeln.

7. System nach irgendeinem vorangehenden Anspruch, in dem die Farbwerte des aufgenommenen Bildes des Zahns wiedergegeben werden durch Intensitäten von roten, blauen und grünen Farb-Komponenten.

8. System nach irgendeinem vorangehenden Anspruch zur Verwendung bei der Farbabstimmung eines natürlichen Zahns oder eines Satzes von Zähnen, so dass eine Zahn-Prothese so konstruiert werden kann, dass sie zu dem natürlichen Zahn eines Patienten passt.

9. Verfahren zur Farbabstimmung oder Identifizierung von Farb-Parametern eines Zahns, umfassend die Schritte:
(i) Aufnehmen eines Farbbildes des Zahns mit einem in großer Nähe zu dem Zahn platzierten einzelnen Grau-Referenz-Farb-Indikator, worin das Grau Cool Grey C Pantone Nr. 8 ist;
(ii) Weiterleiten des aufgenommenen Bildes an eine Stelle, die entfernt von dem Ort ist, an dem das Bild aufgenommen wurde;
(iii) Analysieren von Farbwerten aus dem aufgenommenen Bild; und
(iv) Umwandeln der Farbwerte von dem aufgenommenen Bild in Parameter, von denen die Originalfarbe des Zahns wieder hergestellt werden kann, oder in Parameter, um diese mit einem Referenz-Satz zu vergleichen und/oder individuelle charakteristische Farbwerte aufzuzeichnen.

10. Verfahren nach Anspruch 9, worin der Gegenstand mit einer Zufuhreinrichtung von bekanntem Licht in einer speziellen Entfernung davon vor dem Schritt (i) beleuchtet wird.

11. Verfahren nach einem der Ansprüche 9 oder 10, weiter einschließend den Schritt eines Reduzierens oder Verhinderns, dass Nebenlicht in das Schussfeld eintritt.

12. Verfahren nach irgendeinem der Ansprüche 9 bis 11, worin der Referenz-Farb-Indikator bekannte rote, grüne und blaue Werte aufweist, so dass dann, wenn die Farben des aufgenommenen Bildes analysiert werden, die Referenzfarbe in dem aufgenommenen Bild angeordnet ist und rote, grüne und blaue Werte des gesamten aufgenommenen Bildes relativ zu der Referenzfarbe korrigiert werden.

13. Verfahren nach irgendeinem der Ansprüche 9 bis 12, weiter einschließend den Schritt des Weiterleitens der Farbwerte zurück an einen Ort, an den das ursprüngliche Bild aufgenommen wurde, so dass ein Vergleich zwischen der Farbe des ursprünglichen Zahns und derjenigen des wiederhergestellten Farbbildes durchgeführt werden kann.

14. Verfahren nach irgendeinem der Ansprüche 9 bis 13, worin eine visuelle AnzeigeEinrichtung (visual display unit; VDU) an der Stelle vorgesehen wird, an der das Bild aufgenommen wurde und/oder an der das aufgenommene Bild zur Analyse weitergeleitet wird und mit Software zum Korrigieren von Bezugsfarben-Rot-, -Grün- und -Blau-Werten auf dem Monitor/Bildschirm versehen wird, so dass ein auf der VDU gezeigtes Bild in Bezug auf die Bezugsfarben farb-korrigiert ist.

15. Verfahren nach irgendeinem der Ansprüche 9 bis 14, weiter einschließend den Schritt, dass man ein Farb-Rezept an einen Speicher übergibt oder in einer zentralen Datenbank speichert.

16. Verfahren nach irgendeinem der Ansprüche 9 bis 15, weiter einschließend irgendeines oder mehrere der in den Ansprüchen 2 bis 7 beanspruchten Merkmale.

17. Verfahren nach irgendeinem der Ansprüche 9 bis 16 bei Anwendung in einer FarbAbstimmung eines natürlichen Zahns oder eines Satzes von Zähnen bei einer Dentalprothese.

18. Verfahren nach Anspruch 17, worin dann, wenn man das Bild eines natürlichen Zahns oder natürlicher Zähne eines Patienten *in situ* aufnimmt, die Kamera in einer vorbestimmten Entfernung von einem Skelett-Referenz-Punkt auf dem Schädel eines Patienten angeordnet ist.

19. Verfahren nach Anspruch 18, worin die Kamera in einer Entfernung von 15 bis einschließlich 25 cm vom Skelett-Referenz-Punkt angeordnet ist.

20. Verfahren nach einem der beiden Ansprüche 18 oder 19, worin der Skelett-Referenz-Punkt am Nasenrücken eines Patienten oder an seiner/ihrer Kinnspitze liegt, wobei die Spitze gebildet wird am Verbindungspunkt von Unterkiefer und unterem Satz von Zähnen.

21. Verfahren nach irgendeinem der Ansprüche 17 bis 20, worin die Kamera-Position in Bezug auf den Patienten überwacht wird durch Abgleichen kreuzförmig angeordneter horizontaler und vertikaler Linien oder durch einen gemeinsamen Punkt beim Zusammenfallen eines linken und rechten Lichtstrahls oder Lasers.

22. Verfahren zur Herstellung einer Dental-Prothese unter Anwendung des Verfahrens nach irgendeinem der Ansprüche 9 bis 16, welches weiter die folgenden Schritte umfasst:
(i) Bestimmen von Farbton-Variationen innerhalb eines Zahns;
(ii) Abgleichen der Farbton-Variationen in einer Prothese durch Auswählen einer Abstimmung aus einem vorbestimmten Bereich von Farben von Keramik-Materialien für einzelne Bereiche des Zahns; und
(iii) Bauen einer Prothese durch Färben oder anderweitiges Aufbringen verschiedener Farbtöne von Keramik-Materialien auf eine Basis-Prothese unter Abstimmung der Farb-Variationen in dem Zahn.

## Revendications

1. Système de mise en correspondance de couleurs ou d'identification de composantes de couleurs d'une dent comprenant :
(i) un appareil numérique de prise de vues doté d'un filtrage par polarisation croisée destiné à acquérir une image couleur de la dent (1),
(ii) un moyen (2) destiné à transmettre directement l'image couleur à un endroit à distance de l'emplacement où l'image de la dent a été acquise,
(iii) un moyen (2) destiné à analyser les valeurs de couleurs de l'image, et
(iv) un moyen (4) destiné à convertir les valeurs de couleurs en paramètres à partir desquels la couleur d'origine de la dent peut être reconstituée ou en paramètres et à comparer les valeurs de couleurs à une référence, **caractérisé en ce que** le système comprend en outre un seul indicateur de couleur de référence de gris qui est placé à proximité immédiate de la dent de sorte que l'image acquise contienne la couleur de gris de référence,
où le gris est un gris froid C Pantone numéro 8.

2. Système selon la revendication 1, dans lequel l'indicateur de couleur de référence comprend un bloc globalement en forme de U ou L ou une feuille ou du papier.

3. Système selon l'une quelconque des revendications précédentes, dans lequel le moyen destiné à relayer l'image acquise à un endroit à distance de l'emplacement où l'image a été acquise est un moyen de communication électronique.

4. Système selon la revendication 3, dans lequel le moyen de communication électronique est une connexion Internet, une ligne téléphonique spécialisée ou une porteuse de données.

5. Système selon la revendication 4, dans lequel, dans le cas où l'on relaie des données d'image par l'intermédiaire du système Internet, les données sont cryptées de sorte que bien qu'elles se trouvent dans le domaine public ou "sur les ondes", elles se trouvent sous une forme telle que le public ne peut pas y accéder.

6. Système selon l'une quelconque des revendications précédentes, dans lequel le moyen destiné à analyser les valeurs de couleurs est un programme logiciel informatique qui est capable de convertir l'image à polarisation croisée de l'objet d'origine en une pluralité de composantes de couleurs.

7. Système selon l'une quelconque des revendications précédentes, dans lequel les valeurs de couleurs de l'image acquise de la dent sont représentées par les intensités des composantes de couleurs rouge, bleue et verte.

8. Système selon l'une quelconque des revendications précédentes, à utiliser dans la mise en correspondance de couleurs d'une dent naturelle ou d'un ensemble de dents naturelles de sorte qu'une prothèse dentaire puisse être réalisée pour correspondre à la dent naturelle d'un patient.

9. Procédé de mise en correspondance de couleurs ou d'identification de paramètres de couleurs d'une dent comprenant les étapes consistant à :
(i) acquérir une image couleur de la dent, un seul indicateur de couleur de référence de gris étant placé à proximité immédiate de la dent, le gris étant le gris froid C Pantone numéro 8,
(ii) relayer l'image acquise à un endroit à distance de l'emplacement où l'image a été acquise,
(iii) analyser les valeurs de couleurs à partir de l'image acquise, et
(iv) convertir les valeurs de couleurs à partir de l'image acquise en paramètres à partir desquels la couleur d'origine de la dent peut être reconstituée ou en paramètres de manière à les comparer à un ensemble de référence et/ou à enregistrer des valeurs de couleurs caractéristiques individuelles.

10. Procédé selon la revendication 9, dans lequel l'objet est illuminé par une source de lumière connue à une distance spécifiée de celui-ci avant l'étape (i).

11. Procédé selon soit la revendication 9, soit la revendication 10, comprenant en outre l'étape consistant à réduire/empêcher la lumière incidente d'entrer dans un champ de prise de vues.

12. Procédé selon l'une quelconque des revendications 9 à 11, dans lequel l'indicateur de couleur de référence est constitué de valeurs connues du rouge, du vert et du bleu, de sorte que lorsque les couleurs de l'image acquise sont analysées, la couleur de référence soit localisée dans l'image acquise et que les valeurs du rouge, du vert et du bleu de l'image acquise complète soient corrigées par rapport à la couleur de référence.

13. Procédé selon l'une quelconque des revendications 9 à 12, comprenant en outre l'étape consistant à relayer en retour les valeurs de couleurs à l'emplacement où l'image d'origine a été acquise de sorte qu'une comparaison peut être réalisée entre la couleur de la dent d'origine et celle de l'image couleur reconstituée.

14. Procédé selon l'une quelconque des revendications 9 à 13, dans lequel une unité d'affichage visuelle (VDU) est prévue, à l'endroit où l'image a été acquise et/ou à l'endroit où l'image acquise est relayée en vue d'une analyse, et est dotée d'un logiciel destiné à corriger les valeurs de couleur de référence du rouge, du vert et du bleu sur le moniteur/écran de sorte qu'une image affichée sur l'unité VDU fasse l'objet d'une correction de couleur par rapport à la couleur de référence.

15. Procédé selon l'une quelconque des revendications 9 à 14, comprenant en outre l'étape consistant à enregistrer en mémoire ou mémoriser une formulation de couleur dans une banque de données centrale.

16. Procédé selon l'une quelconque des revendications 9 à 15, comprenant en outre l'une quelconque ou plusieurs quelconques des caractéristiques citées dans les revendications 2 à 7.

17. Procédé selon l'une quelconque des revendications 9 à 16, lorsqu'il est utilisé dans la mise en correspondance de couleurs d'une dent naturelle ou d'un ensemble de dents naturelles avec une prothèse dentaire.

18. Procédé selon la revendication 17, dans lequel lors de l'acquisition de l'image d'une dent ou de dents naturelles du patient *in situ,* l'appareil de prise de vues est positionné à une distance prédéterminée d'un point de référence de squelette sur le crâne du patient.

19. Procédé selon la revendication 18, dans lequel l'appareil de prise de vues est positionné à 15 à 25 cm inclus du point de référence de squelette.

20. Procédé selon soit la revendication 18, soit la revendication 19, dans lequel le point de référence du squelette se trouve au niveau de la racine du nez du patient ou au niveau d'un point sur son menton, le point étant formé au niveau de la jonction de la mâchoire inférieure et de l'ensemble de dents du bas.

21. Procédé selon l'une quelconque des revendications 17 à 20, dans lequel la position de l'appareil de prise de vues par rapport au patient est surveillée en alignant les traits horizontal et vertical d'un réticule en croix ou grâce à un point commun lorsque des faisceaux lumineux ou des lasers gauche et droit coïncident.

22. Procédé de fabrication d'une prothèse dentaire en utilisant le procédé selon l'une quelconque des revendications 9 à 16, comprenant en outre les étapes consistant à :
(i) déterminer des variations de nuance dans une dent,
(ii) reproduire les variations de nuance dans une prothèse en sélectionnant une couleur correspondante à partir d'une plage prédéterminée de couleurs pour céramiques pour des zones individuelles de la dent, et
(iii) réaliser une prothèse par peinture ou sinon par application de différentes nuances de céramiques sur une prothèse de base de manière à correspondre aux variations de couleurs dans la dent.
